# EUROPÄISCHE PATENTSCHRIFT

(11) **EP 0 418 640 B1**
(45) Veröffentlichungstag und Bekanntmachung des Hinweises auf die Patenterteilung: **06.04.1994**
(21) Anmeldenummer: 90116951.6
(22) Anmeldetag: 04.09.1990
(51) Int. Cl.: F16C 29/04, F16C 33/46

(54) **Käfig für ein Wälzlager für Längsbewegungen**
Cage for a rolling bearing for longitudinal movements
Cage pour palier à roulement pour mouvements longitudinaux

(30) Priorität: 21.09.1989 DE 3931446
(43) Veröffentlichungstag der Anmeldung: 27.03.1991
(73) Patentinhaber: INA Wälzlager Schaeffler KG, 91063 Herzogenaurach (DE)
(72) Erfinder: Rabe, Jürgen, Dipl.-Ing., D-8521 Aurachtal (DE)

(56) Entgegenhaltungen:
- DE-A- 3 505 786
- DE-B- 1 168 176
- DE-C- 725 645
- US-A- 4 470 643

## Beschreibung

Die Erfindung betrifft einen Käfig aus polymerem Werkstoff für ein Wälzlager für Längsbewegungen, der aus Zwei länglichen, parallel mit gegenseitigem Abstand zueinander angeordneten Käfigplatten besteht, die sich in einem ungeknickten Zustand des Käfigs in einer gemeinsamen Ebene befinden und in denen quer zu ihrer Längserstreckung Taschen für die Aufnahme zylindrischer Wälzkörper vorgesehen sind, und die durch wenigstens einen, sich über eine Teillänge der Käfigplatten erstrekkenden, einstückig mit den Käfigplatten gebildeten, ersten Verbindungssteg verbunden sind, dessen Dicke geringer als die Dicke der Käfigplatten ist und der als Filmscharnier wirkt, um die Käfigplatten in einem geknickten Zustand in unterschiedliche gegenseitige Winkelstellungen bringen zu können.

Ein solcher Wälzkörperkäfig ist aus dem Dokument DE-B-1 168 176 bekannt und für prismatische Rollbahnen vorgesehen, dessen beide Käfigplatten sowie der gelenkige Verbindungssteg ein zusammenhängendes Teil bilden. Der Verbindungssteg ist so bemessen, daß die Platten durch plastische oder federnde Verformung des Verbindungsstegs zueinander in jeden beliebigen Winkel gebracht werden können. Auch das Dokument DE-U-1 890 032 zeigt einen doppelreihigen Flachkäfig, der als lineares Führungselement in einer Ebene oder unter Bildung eines Winkels zwischen den Käfigplatten in zwei Ebenen für die geradlinige Verschiebung zur Anwendung kommen kann. Um dort bei der gegenseitigen Beweglichkeit der Käfigplatten zueinander und damit bei der plastischen oder federnden Verformung des zwischen den Käfigplatten befindlichen geschwächten Werkstoffs die Ausbildung einer eindeutigen Gelenkachse zu erreichen, wird die Werkstoffschwächung zwischen den Käfigplatten hier durch eine keilförmige Nut erzeugt.

Wenn ein solcher Käfig nicht in der planen Ausführungsform, sondern mit winkeliger Anstellung der beiden Käfigplatten verwendet werden soll, so kann er in einer Vorrichtung unter Zufuhr von Wärme und unter Berücksichtigung der Relaxation des Käfigwerkstoffs in die gewünschte Winkelstellung gebogen werden. Das hat folgende Nachteile: Der Biegeprozeß erfordert einen zusätzlichen Arbeitsgang. Im Bereich der durch die keilförmige Nut gebildeten Gelenkachse des Filmscharniers des Käfigs kann es schon infolge geringster Veränderungen der Verarbeitungsbedingungen zu Brüchen kommen, da die verarbeitungsbedingten Materialeigenschaften das Elastizitätsverhalten und die Verformungsmöglichkeiten des Filmscharniers bestimmen. Da die Relaxation des polymeren Werkstoffs nicht exakt definierbar ist, kann es längs der Käfigplatten zu ungleichen Winkelstellungen mit einer hohen Toleranzbreite kommen.

Der Erfindung liegt die Aufgabe zugrunde, den Käfig so zu gestalten, daß er stets eine in sich stabile Form aufweist. Der Käfig soll also sowohl in der planen Ausführung, in der sich die beiden Käfigplatten in einer gemeinsamen Ebene befinden, als auch in der gebogenen Ausführung, in der die beiden Käfigplatten einen vorgegebenen Winkel miteinander bilden, seine Form über lange Zeiträume exakt beibehalten. Die Herstellung eines gebogenen Käfigs aus einem planen Käfig soll sich in einfacher Weise durchführen lassen.

Diese Aufgabe wird erfindungsgemäße dadurch gelöst, daß über eine weitere Teillänge der Käfigplatten wenigstens ein zweiter Verbindungssteg angeordnet ist, der so dachartig oder gewölbt ausgebildet ist, daß seine mittlere Faser zwischen den beiden Käfigplatten eine größere Länge aufweist, als die mittlere Faser des ersten Verbindungssteges, so daß im ungeknickten Zustand der beiden Käfigplatten die mittlere Faser des zweiten Verbindungssteges senkrecht zur vorgenannten gemeinsamen Ebene gesehen unterhalb der mittleren Faser des ersten Verbindungssteges nach unten spitz zulaufend eine V-Form aufweist oder nach unten gewölbt verläuft und dabei im zweiten Verbindungssteg eine dem ersten Verbindungssteg zugekehrte Nut in Längsrichtung der beiden Käfigplatten mit einer Gelenkachse am Nutgrund ausgebildet ist, um welche die Käfighälften im geknickten Zustand derart gebogen sind, daß die mittlere Faser des zweiten Verbindungssteges größtenteils oberhalb der mittleren Faser des ersten Verbindungssteges nach oben spitz zulaufend eine V-Form aufweist oder nach oben gewölbt verläuft.

Durch diese Ausführung ergeben sich bei einem planen Käfig für den Verbindungsbereich der beiden Käfigplatten Teilbereiche, deren Oberflächen in unterschiedlich angestellten Ebenen liegen und die wie Versteifungsrippen wirken, so daß eine Einhaltung der exakten Käfigform, insbesondere der Stellung der beiden Käfigplatten zueinander, begünstigt wird. Dieser Effekt tritt auch dann ein, wenn der plane Käfig um einen geringen Biegewinkel um beispielsweise 10 Grad umgebogen wird, wonach die beiden Käfigplatten selbsttätig in eine durch die konstruktiven Abmessungen im Verbindungsbereich vorbestimmbare Winkelstellung einschnappen. Nach dieser Verbiegung und Dehnung des Käfigwerkstoffs nehmen die mittleren Fasern der unterschiedlichen Verbindungsstege wieder ihre ursprünglichen Längen ein. Dabei ergibt sich in der neuen Stellung dann wieder ein stabiler Verspannungszustand der Verbindungsteilbereiche. In der neuen Winkelstellung können die beiden Käfigplatten beispielsweise einen Winkel von 90 Grad bilden.

Es ist auch möglich, daß in Käfiglängsrichtung mehrere dachartig ausgebildete oder gewölbte Verbindungsstege in Abständen hintereinander angeordnet sind. Durch diese Maßnahme wird für die Bildung der gebogenen Käfigausführung die Biegearbeit wegen der Werkstoffausnehmungen zwischen den Verbindungsstegen verringert.

Der erstgenannte Verbindungssteg und der dachartig ausgebildete oder gewölbte weitere Verbindungssteg können auch kontinuierlich ineinander übergehen.

Ausführungsbeispiele der Erfindung sind in der Zeichnung dargestellt und werden im folgenden näher beschrieben. Es zeigen:
- Fig. 1: eine Draufsicht auf einen planen Käfig;
- Fig. 2: einen Schnitt gemäß Linie II-II durch den Käfig nach Figur 1;
- Fig. 3: einen Schnitt gemäß Linie III-III durch den Käfig nach Figur 1;
- Fig. 4: einen Schnitt durch einen gebogenen Käfig entsprechend Figur 3 des planen Käfigs;
- Fig. 5: eine Draufsicht auf einen weiteren planen Käfig;
- Fig. 6: einen Schnitt gemäß Linie VI-VI durch den Käfig nach Figur 5;
- Fig. 7: einen Schnitt gemäß Linie VII-VII durch den Käfig nach Figur 5;
- Fig. 8: einen Schnitt durch einen gebogenen Käfig entsprechend Figur 7 des planen Käfigs.

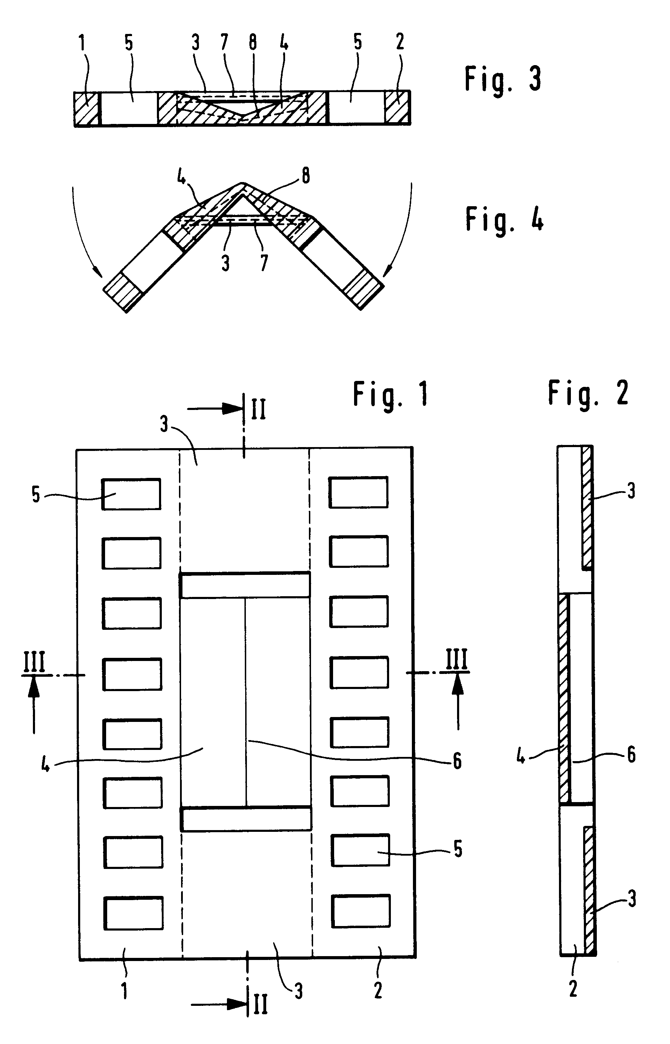

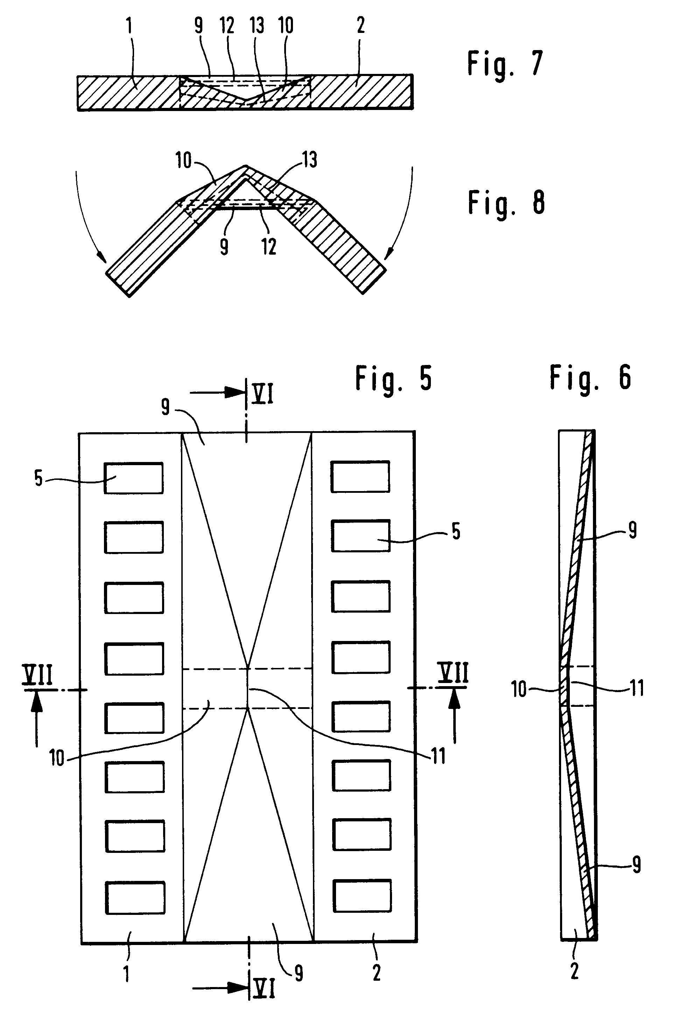

Der Käfig nach den Figuren 1 bis 3 besteht aus zwei parallelen Käfigplatten 1 und 2, die über einen Verbindungsbereich miteinander verbunden und aus einem polymeren Werkstoff einstückig ausgeführt sind. Der zwischen den beiden Käfigplatten 1 und 2 befindliche Verbindungsbereich enthält zwei jeweils von der Ebene der beiden Stirnseiten der Käfigplatten ausgehende Verbindungsstege 3 und zwischen diesen einen weiteren Verbindungssteg 4. Diese Verbindungsstege haben eine geringere Dicke, als die beiden mit Taschen 5 für die Aufnahme von Wälzkörpern versehenen Käfigplatten 1 und 2. Die Verbindungsstege 3 haben eine konstante Dicke, während die Dicke des Verbindungssteges 4 von der in Längsrichtung verlaufenden Mittellinie der beiden Käfigplatten 1 und 2 zu den Platten hin anwächst. Der Verbindungssteg 4 weist daher eine nach oben offene keilförmige Nut 6 auf, deren Nutgrund eine Gelenkachse bildet, um welche die beiden Käfigplatten 1 und 2 aus der ebenen Stellung in Pfeilrichtung in eine winkelige Stellung gebogen werden können, wie sie die Figur 4 zeigt. Infolge dieser unterschiedlichen Ausbildungen der Verbindungsstege 3 und 4 ergeben sich in den Stegen mittlere Fasern unterschiedlicher Länge. So sind die mittleren Fasern 7 der Verbindungsstege 3 zwischen den Käfigplatten 1 und 2 kürzer, als die mittlere Faser 8 des Verbindungssteges 4. Bei einer Verbiegung des Käfigs aus der planen Stellung gemäß Figur 3 in die winkelige Stellung gemäß Figur 4 nehmen die mittleren Fasern 7 und 8 nach der Dehnung des Käfigwerkstoffs wieder ihre ursprünglichen Längen ein, der Käfig hat daher auch nach dem Einschnappen in die winkelige Stellung eine stabile Form, die sich im Laufe der Zeit nicht verändert.

Der plane Käfig nach den Figuren 5 bis 7 und der daraus gebildete gebogene Käfig gemäß Figur 8 ist ähnlich aufgebaut, hier befinden sich jedoch im Verbindungsbereich zwischen den beiden Käfigplatten 1 und 2 von den stirnseitigen Ebenen der Käfigplatten ausgehende Verbindungsstege 9 konstanter Dicke, die gegenüber der oberen und der unteren Begrenzungsebene des Käfigs in einem Winkel verlaufen und im mittleren Käfigbereich kontinuierlich in einen Verbindungssteg 10 übergehen, der eine in Käfiglängsrichtung verlaufende Nut 11 aufweist, die die Gelenkachse für das Verbiegen der Käfigplatten 1 und 2 bildet. Der Verbindungssteg 10 ist also ebenso, wie der Verbindungssteg 4 der Käfigausführung nach den Figuren 1 bis 4, so dachartig ausgebildet, daß seine mittlere Faser 13 eine größere Länge aufweist, als die mittleren Fasern 12 der Verbindungsstege 9.

## Patentansprüche

1. Käfig aus polymerem Werkstoff für ein Wälzlager für Längsbewegungen, der aus zwei länglichen, parallel mit gegenseitigem Abstand zueinander angeordneten Käfigplatten (1,2) besteht, die sich in einem ungeknickten Zustand des Käfigs in einer gemeinsamen Ebene befinden und in denen quer zu ihrer Längserstreckung Taschen (5) für die Aufnahme zylindrischer Wälzkörper vorgesehen sind, und die durch wenigstens einen, sich über eine Teillänge der Käfigplatten (1,2) erstreckenden, einstückig mit den Käfigplatten (1,2) gebildeten, ersten Verbindungssteg (3,9) verbunden sind, dessen Dicke geringer als die Dicke der Käfigplatten (1,2) ist und der als Filmscharnier wirkt, um die Käfigplatten (1,2) in einem geknickten Zustand in unterschiedliche gegenseitige Winkelstellungen bringen zu können,
**dadurch gekennzeichnet,**
daß über eine weitere Teillänge der Käfigplatten (1,2) wenigstens ein zweiter Verbindungssteg (4,10) angeordnet ist, der so dachartig oder gewölbt ausgebildet ist, daß seine mittlere Faser (8,13) Zwischen den beiden Käfigplatten (1,2) eine größere Länge aufweist als die mittlere Faser (7, 12) des ersten Verbindungssteges (3,9), so daß im ungeknickten Zustand der beiden Käfigplatten (1,2) die mittlere Faser (8,13) des zweiten Verbindungssteges (4,10) senkrecht zur vorgenannten gemeinsamen Ebene gesehen unterhalb der mittleren Faser (7,12) des ersten Verbindungssteges (3,9) nach unten spitz zulaufend eine V-Form aufweist oder nach unten gewölbt verläuft und dabei im zweiten Verbindungssteg (4,10) eine dem ersten Verbindungssteg (3,9) zugekehrte Nut in Längsrichtung der beiden Käfigplatten (1,2) mit einer Gelenkachse am Nutgrund ausgebildet ist, um welche die Käfighälften (1,2) im geknickten Zustand derart gebogen sind, daß die mittlere Faser (8,13) des zweiten Verbindungssteges (4,10) größtenteils oberhalb der mittleren Faser (7,12) des ersten Verbindungssteges (3,9) nach oben spitz zulaufend eine V-Form aufweist oder nach oben gewölbt verläuft.

2. Käfig nach Anspruch 1, **dadurch gekennzeichnet,** daß in Käfiglängsrichtung mehrere dachartig ausgebildete oder gewölbte Verbindungsstege (4, 10) in Abständen hintereinander angeordnet sind.

3. Käfig nach Anspruch 1, **dadurch gekennzeichnet,** daß der erstgenannte Verbindungssteg (3, 9) und der dachartig ausgebildete oder gewölbte weitere Verbindungssteg (4, 10) kontinuierlich ineinander übergehen.

## Claims

1. Cage made of polymeric material for a rolling bearing for longitudinal movements, consisting of two elongate cage plates (1, 2) which are arranged parallel to each other with mutual spacing and which are located in a common plane in an unbent state of the cage and in which are provided, transversely to the longitudinal extent thereof, pockets (5) for receiving cylindrical rolling bodies, and which are connected by at least one first connecting web (3, 9) which extends over part of the length of the cage plates (1, 2) and is formed in one piece with the cage plates (1, 2) and of which the thickness is less than the thickness of the cage plates (1, 2) and which acts as a film hinge in order to be able to bring the cage plates (1, 2) in a bent state into different mutual angular positions, characterised in that over another part of the length of the cage plates (1, 2) is arranged at least one second connecting web (4, 10) which is roof-shaped or arched such that its central strand (8, 13) between the two cage plates (1, 2) has a greater length than the central strand (7, 12) of the first connecting web (3, 9), so that in the unbent state of the two cage plates (1, 2), the central strand (8, 13) of the second connecting web (4, 10) beneath the central strand (7, 12) of the first connecting web (3, 9) as seen perpendicularly to the above-mentioned common plane has a V-shape tapering downwardly or is arched downwardly and at the same time in the second connecting web (4, 10) is formed a groove facing towards the first connecting web (3, 9) in the longitudinal direction of the two cage plates (1, 2) with a joint axis at the bottom of the groove, about which the cage halves (1, 2) in the bent state are bent in such a way that the central strand (8, 13) of the second connecting web (4, 10) mainly above the central strand (7, 12) of the first connecting web (3, 9) has a V-shape tapering upwardly or is arched upwardly.

2. Cage according to claim 1, characterised in that in the longitudinal direction of the cage several roof-shaped or arched connecting webs (4, 10) are arranged at intervals one behind the other.

3. Cage according to claim 1, characterised in that the first-mentioned connecting web (3, 9) and the roof-shaped or arched additional connecting web (4, 10) merge with each other continuously.

## Revendications

1. Cage en matière polymère pour un palier à roulement pour des mouvements longitudinaux qui comprend deux plaques de cage (1, 2) de forme allongée disposées en parallèle à distance l'une de l'autre qui, à l'état non plié de la cage, se trouvent dans un seul plan commun et dans lesquelles, il est prévu des poches (5) pour le logement de corps roulants cylindriques, lesdites plaques étant reliées entre elles par au moins une première entretoise de liaison (3, 9) qui s'étend sur une partie de la longueur des plaques de cage (1, 2) en étant réalisée en une seule pièce avec elles, l'épaisseur de ladite entretoise (3, 9) étant inférieure à l'épaisseur des plaques de cage (1, 2) et l'entretoise (3, 9) fonctionnant en tant qu'une charnière en bande pour amener, à l'état plié, les plaques de cage (1, 2) dans des positions angulaires relatives différentes, caractérisée en ce que, sur une autre partie de la longueur des plaques de cage (1, 2), il est agencé au moins une seconde entretoise de liaison (4, 10) qui est configurée en forme de toit ou est incurvée de telle sorte que son axe médian (8, 13) entre les deux plaques de cage (1, 2) a une longueur supérieure à celle de l'axe médian (7, 12) de la première entretoise de liaison (3, 9), de sorte que, dans l'état non plié des deux plaques de cage (1, 2), l'axe médian (8, 13) de la seconde entretoise de liaison (4, 10), en regardant en direction verticale par rapport audit plan commun, s'étend vers le bas et termine en pointe en formant un V en-dessous de l'axe médian (7, 12) de la première entretoise de liaison (3, 9), ou bien ladite seconde entretoise de liaison est incurvée vers le bas, il étant prévu dans cette seconde entretoise de liaison (4, 10), une rainure qui s'étend dans la direction longitudinale des deux plaques de cage (1, 2) et fait face à la première entretoise de liaison (3, 9) en formant, à son fond, un axe d'articulation autour duquel les deux moitiés (1, 2) de la cage sont pliées, dans l'état plié, de telle sorte que l'axe médian (8, 13) de la seconde entretoise de liaison (4, 10) s'étend pour la plupart en-dessus de l'axe médian (7, 12) de la première entretoise de liaison (3, 9) et termine en pointe vers le haut en formant un V, ou bien qu'elle est incurvée vers le haut.

2. Cage selon la revendication 1, caractérisée en ce que plusieurs entretoises de liaison en forme de toit ou de forme incurvée (4, 10) sont agencées dans la direction longitudinale de la cage à distance l'une de l'autre.

3. Cage selon la revendication 1, caractérisée en ce que la première entretoise de liaison (3, 9) et l'autre entretoise en forme de toit ou de forme incurvée (4, 10) se raccordent l'une à l'autre de manière continue.
